# EUROPÄISCHE PATENTANMELDUNG

(11) **EP 0 917 969 A2**
(43) Veröffentlichungstag der Anmeldung: **26.05.1999**
(21) Anmeldenummer: 98119021.8
(22) Anmeldetag: 08.10.1998
(51) Int. Cl.: B60B 27/00

(54) **Vormontage-Baueinheit für Kraftfahrzeug**

(30) Priorität: 10.10.1997 DE 19744870
(71) Anmelder: Continental Teves AG & Co. oHG, 60488 Frankfurt (DE)
(72) Erfinder: Döll, Andreas, 60439 Frankfurt (DE)

(57) **Zusammenfassung**

Vorgeschlagen wird eine Vormontage-Baueinheit für angetriebene Achsen von Kraftfahrzeugen mit einem Radflansch (1), einer Bremsscheibe (2), einem Radlager (3) sowie einem Innenteil (5) einen Außenteil (6) und ein Wälzlager (7) umfassenden Gleichlaufgelenk, die in ein fahrzeugseitiges Trägerbauteil (4) einsetzbar ist.

Die Baueinheit ist erfindungsgemäß dadurch gekennzeichnet, daß der Innenteil (5) des Gleichlaufgelenks einstückig mit einem Wellenzapfen (5a) ausgebildet ist, der drehfest mit dem Ende einer Antriebswelle (8) verbindbar ist.

Damit wird die bisher im Gleichlaufgelenk liegende Montage-Schnittstelle zur Antriebswelle hin verlegt, so daß nunmehr das Gleichlaufgelenk einschließlich Dichtmanschette 10 komplett zur Vormontage-Baueinheit führt, wodurch die Endmontage wesentlicht vereinfacht wird.

## Beschreibung

Die Erfindung betrifft eine Vormontage-Baueinheit für angetriebene Achsen von Kraftfahrzeugen mit einem Radflansch, einer Bremsscheibe, einem Radlager, sowie einem Innenteil einen Außenteil und ein Wälzlager umfassenden Gleichlaufgelenk, die in ein Trägerbauteil des Fahrzeugs einsetzbar ist.

Seitens der Automobilhersteller ist man bestrebt, den Fertigungsaufwand bei der Endmontage so klein wie möglich zu halten, d.h. möglichst viele und umfassende Vormontage-Baueinheiten zu verwenden und den Fertigungsaufwand möglichst weitgehend auf die Zulieferer verlagern. Für die Zulieferer ist diese Entwicklung in zweifacher Hinsicht vorteilhaft. Einerseits erlaubt der bei ihnen anfallende höhere Montageaufwand eine bessere Auslastung der Kapazitäten und andererseits können dabei die eigenen Produktteile weitgehend im eigenen Hause zusammengesetzt werden, was eine bessere Kontrolle erlaubt und die Haftungsgrenzen deutlicher hervortreten läßt. Selbstverständlich müssen in diesem Zusammenhang die Montage-Schnittstellen exakt definiert werden, damit insoweit eine klare Abgrenzung der Haftung möglich ist.

Bei Vormontage-Baueinheiten der eingangs genannten Art liegt die Montage-Schnittstelle meist im Gleichlaufgelenk, über das die Antriebsleistung von einer Antriebswelle auf die angetriebenen Räder übertragen wird. Die Vormontage-Baueinheit umfaßt dabei den Radflansch, die daran befestigte Bremsscheibe, das Radlager und den mit der Radnarbe verbundenen Außenteil des Gleichlaufgelenks. Diese Baueinheit wird bei der Montage in den fahrzeugseitigen Trägerbauteil eingesetzt, wobei gleichzeitig der Außenteil des Gleichlaufgelenks über das Wälzlager mit dem Innenteil des Gleichlaufgelenks verbunden wird, der seinerseits fahrzeugseitig vormontiert ist. Es leuchtet ohne weiteres ein, daß dieser Montageschritt sehr aufwendig ist und erhebliches Geschick erfordert, weil zwei Wälzlagerpassungen beteiligt sind, deren genaue maßliche Abstimmung aufeinander von erheblicher Bedeutung für das einwandfreie Funktionieren der Baueinheit während des Fahrzeugbetriebes ist.

Bei den bekannten Vormontage-Baueinheiten der eingangs genannten Art mit einer Montage-Schnittstelle im Gleichlaufgelenk kommt erschwerend hinzu, daß die zur Abdichtung des Gleichlaufgelenks erforderliche Manschette erst zum Schluß montiert werden kann, was wegen der oft beengten Platzverhältnisse nicht einfach ist, gleichwohl aber mit großer Sorgfalt durchgeführt werden muß, weil die Lebensdauer des Gleichlaufgelenks in hohem Maße von der einwandfrei montierten Dichtmanschette abhängig ist.

Aus den vorgenannten Unzulänglichkeiten bekannter, einschlägiger Vormontage-Baueinheiten ergibt sich die Aufgabe, eine derartige Baueinheit so weiterzuentwickeln, daß die Montage erheblich vereinfacht wird und daß eine in sich besser abgeschlossene Baueinheit zur Verfügung gestellt wird, die bei der Endmontage problemlos gehandhabt werden kann.

Zur Lösung dieser Aufgabe wird vorgeschlagen, daß bei der gattungsmäßigen Vormontage-Baueinheit der Innenteil des Gleichlaufgelenks einstückig mit einem Wellenzapfen ausgebildet ist, der drehfest mit dem Ende einer Antriebswelle verbindbar ist.

Dem liegt die Erwägung zugrunde, die Montage-Schnittstelle aus dem Gleichlaufgelenk zu verlegen, damit letztere einschließlich Dichtmanschette komplett vormontiert werden kann und bei der Endmontage - abgesehen von dem Einbau in den Trägerbauteil - nur noch eine Verbindung des Wellenzapfens mit der Antriebswelle hergestellt werden muß.

Besonders vorteilhaft ist es, wenn der Wellenzapfen hohlzylindrisch mit einer Kerbverzahnung ausgebildet ist, so daß er einfach auf das entsprechend ausgebildete Ende der Antriebswelle aufgesteckt werden kann. Die erforderliche Dichtmanschette kann in einfacher Weise einerseits auf dem Wellenzapfen des Innenteils und andererseits auf dem Außenteil des Gleichlaufgelenks befestigt werden.

Andere zweckmäßige und vorteilhafte Ausgestaltungen des Erfindungsgedankens sind in den Unteransprüchen 4 bis 12 beschrieben.

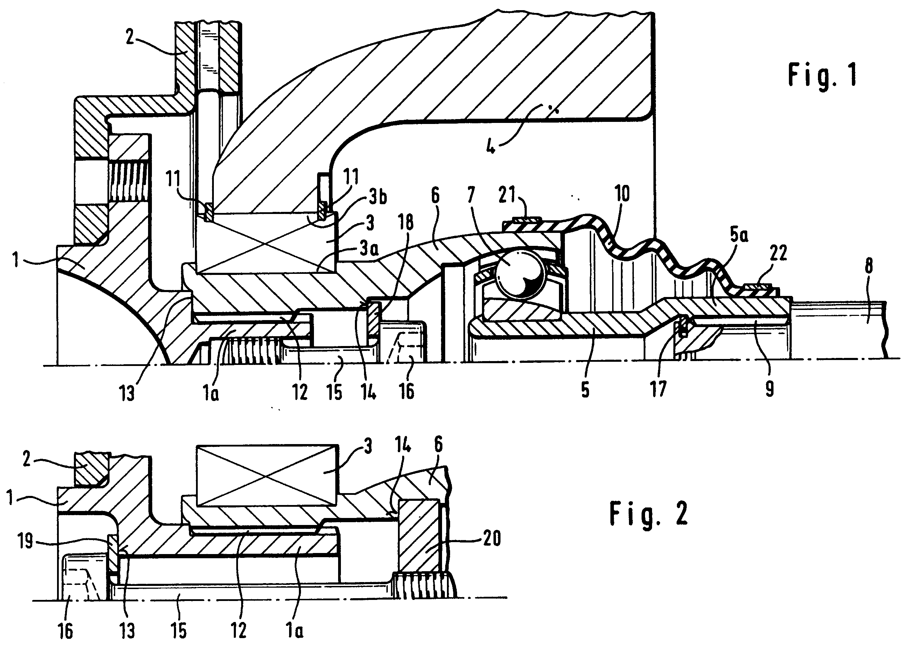

Weitere Einzelheiten werden anhand der in den Figuren 1 und 2 dargestellten Ausführungsbeispiele näher erläutert. Es zeigen:
- Fig. 1: die obere Hälfte einer ersten Ausführungsform der erfindungsgemäßen Baueinheit im Längsschnitt,
- Fig. 2: eine zweite Ausführungsform der erfindungsgemäßen Baueinheit im Teil-Längsschnitt.

Bei der Ausführungsform gemäß Fig. 1 ist die Vormontage-Baueinheit in fertig montiertem Zustand dargestellt, d.h. einerseits gelagert im fahrzeugseitigen Trägerbauteil 4 und andererseits verbunden mit dem Ende einer fahrzeugseitigen Antriebswelle 8. Die Montage im Trägerbauteil 4, der ein Achsschenkel sein kann, erfolgt in bekannter Weise durch Einpressen des Außenrings 3b des Radlagers 3 in den Trägerbauteil und axiale Festlegung mittels Seegerringen 11. Die Verbindung mit der Antriebswelle ist als einfache Steckverbindung mit einer Kerbverzahnung 9 ausgebildet, wobei eine axiale Festlegung über einen Federring 17 vorgenommen werden kann, der bei einer notwendigen Demontage über eine angepaßte Rampe im Wellenzapfen 5a des Innenteils 5 des Gleichlaufgelenks zusammendrückbar ist.

Innenteil 5 und Außenteil 6 des Gleichlaufgelenks sind einschließlich Wälzlager 7 dabei fertig montiert und durch die ebenfalls bereits aufgesetzte Dichtmanschette 10 nach außen abgedichtet. Letztere ist wie üblich durch bandförmige Spannelemente 21, 22 außen auf dem Wellenzapfen 5a und auf dem Außtenteil 6 festgelegt, wobei auch hier übliche axiale Fixierungen zusätzlich anwendbar sind.

Der Innenring 3a des Radlagers 3 ist auf eine Paßfläche des Außenteils 6 aufgepreßt und axial durch Rollnieten fixiert. Die Bremsscheibe 2 ist in üblicher Weise mit der Radnabe 1 verbunden, wobei nur eine für die Montage geeignete relative Fixierung der beiden Bauteile vorgesehen werden muß, weil die Antriebs- und Bremskräfte über die Befestigungsmittel übertragen werden, mit denen die Radfelge am Radflansch befestigt wird.

Der Radflansch 1 greift mit einem zylindrischen Fortsatz 1a in den Außenteil 6 des Gleichlauflagers ein, wobei aufeinander abgestimmte Kerbverzahnungen 12 vorgesehen sind, um das Drehmoment zu übertragen. Außerdem sind Radflansch 1 und Außenteil 6 des Gleichlauflagers mittels einer Dehnschraube 15 und einer Scheibe 18 über Anschlagflächen 13, 14 axial miteinander verspannt. Dabei greift die Dehnschraube 15 in ein Gewinde des zylindrischen Fortsatzes 1a ein. Der Kopf 16 der Dehnschraube 15 ist bei dieser Ausführungsform antriebsseitig, d.h. innenliegend, angeordnet.

Bei der Ausführungsform gemäß Fig. 2 ist hingegen vorgesehen, daß der Kopf 16 der Dehnschraube 15 radseitig, d.h. außenliegend, angeordnet ist. Er stützt sich über einen Ring 19 am Radflansch 1 ab, an dem wie beim ersten Ausführungsbeispiel die Bremsscheibe 2 befestigt ist. Das Radlager 3 ist wiederum auf einer Paßfläche des Außenteils 6 des Gleichlaufgelenks angeordnet und durch Rollnieten axial fixiert. Der Fortsatz 1a des Radflansches 1 und der Außenteil 6 weisen wiederum eine aufeinander abgestimmte Kerbverzahnung 12 auf. Am Radflansch 1 und dem Außenteil 6 des Gleichlaufgelenks sind wiederum Anschlagflächen 13, 14 ausgebildet, auf denen sich die Scheibe 19 und die Gewindescheibe 20 abstützen. Über die Scheibe 19 und die Gewindescheibe 20 bzw. die Anschlagflächen 13 und 14 sind Radnabe 1 und Außenteil 6 des Gleichlaufgelenks mittels der Dehnschraube 15 axial miteinander verspannt. Alle anderen Bauteile der Ausführungsform gemäß Fig. 2 können wie bei der Ausführungsform gemäß Fig. 1 oder äquivalent ausgeführt sein.

## Patentansprüche

1. Vormontage-Baueinheit für angetriebene Achsen von Kraftfahrzeugen mit einem Radflansch (1), einer Bremsscheibe (2), einem Radlager (3), sowie einem Innenteil (5) einen Außenteil (6) und ein Wälzlager (7) umfassenden Gleichlaufgelenk, die in ein Trägerbauteil (4) des Fahrzeugs einsetzbar ist, **dadurch gekennzeichnet,** daß der Innenteil (5) des Gleichlaufgelenks einstückig mit einem Wellenzapfen (5a) ausgebildet ist, der drehfest mit dem Ende einer Antriebswelle (8) verbindbar ist.

2. Baueinheit nach Anspruch 1, **dadurch gekennzeichnet,** daß der Wellenzapfen (5a) hohlzylindrisch mit einer Kerbverzahnung (9) ausgebildet ist.

3. Baueinheit nach Anspruch 1 oder 2, **dadurch gekennzeichnet,** daß eine Dichtmanschette (10) vorgesehen ist, die am Wellenzapfen (5a) und am Außenteil (6) des Gleichlaufgelenks befestigt ist.

4. Baueinheit nach einem der Ansprüche 1 bis 3, **dadurch gekennzeichnet,** daß der Innenring (3a) des Radlagers (3) auf dem Außenteil (6) des Gleichlaufgelenks abgestützt ist.

5. Baueinheit nach Anspruch 4, **dadurch gekennzeichnet,** daß der Innenring (3a) des Radlagers (3) durch Aufpressen auf den Außenteil (6) des Gleichlaufgelenks und Rollnieten des radseitigen Endes des Außenteils (6) des Gleichlaufgelenks befestigt ist.

6. Baueinheit nach Anspruch 5, **dadurch gekennzeichnet,** daß der Außenring (3b) des Radlagers (3) in den Trägerbauteil (4) einpaßbar und axial festlegbar ist.

7. Baueinheit nach Anspruch 6, **dadurch gekennzeichnet,** daß der Außenring (3b) des Radlagers (3) mittels Seegerringen (11) im Trägerbauteil (4) axial festgelegt ist.

8. Baueinheit nach einem der Ansprüche 4 bis 7, **dadurch gekennzeichnet,** daß der Radflansch (1) mit einem zylindrischen Fortsatz (1a) in den Außenteil (6) des Gleichlaufgelenks eingreift.

9. Baueinheit nach Anspruch 8, **dadurch gekennzeichnet,** daß der Fortsatz (1a) und der Außenteil (6) des Gleichlaufgelenks mit korrespondierenden Kerbverzahnungen (12) ausgestattet sind.

10. Baueinheit nach Anspruch 9, **dadurch gekennzeichnet,** daß der Radflansch (1) und der Außenteil (6) des Gleichlaufgelenks über Anschlagflächen (13, 14) mittels einer zentral angeordneten Dehnschraube (15) axial gegeneinander verspannt sind.

11. Baueinheit nach Anspruch 10, **dadurch gekennzeichnet,** daß der Kopf (16) der Dehnschraube (15) radseitig, d.h. außen, angeordnet ist.

12. Baueinheit nach Anspruch 10, **dadurch gekennzeichnet,** daß der Kopf (16) der Dehnschraube (15) antriebsseitig, d.h. innen, angeordnet ist.
